# EUROPEAN PATENT APPLICATION

(11) **EP 4 274 032 A1**
(43) Date of publication of application: **08.11.2023**
(21) Application number: 21923678.3
(22) Date of filing: 02.02.2021
(51) Int. Cl.: H01R 13/436, H01R 13/639

(54) **CONNECTOR AND TERMINAL LOCKING MECHANISM**

(71) Applicant: Huawei Technologies Co., Ltd., Shenzhen, Guangdong 518129 (CN)
(72) Inventor: HUANG, Dong, Shenzhen, Guangdong 518129 (CN)
(74) Representative: Grünecker Patent- und Rechtsanwälte PartG mbB
(86) International application number: PCT/CN2021/074933
(87) International publication number: WO 2022/165649

(57) **Abstract**

This application relates to the connector field, and more specifically, relates to a connector (200, 600) that can be used to assemble a resistor (4, 8). The connector (200, 600) includes a connector housing (2, 6) and a terminal (3, 7, 10), in which the terminal (3, 7, 10) is mounted on the connector housing (2, 6), a resistor mounting portion (124, 134) and a resistor connecting member (12, 13) are disposed on the connector (200, 600), the resistor mounting portion (124, 134) is configured to mount the resistor (4, 8), and the resistor connecting member (12, 13) is configured to electrically connect the resistor (4, 8) mounted on the resistor mounting portion (124, 134) to the terminal (3, 7, 10). This implements flexible configuration of the resistor, reduces bus winding caused by ensuring that a length of a cable stub connected to a bus is less than a maximum allowable length of the cable stub, reduces the length of the bus, and saves bus costs. This application also relates to a terminal locking mechanism (1, 5).

## Description

### TECHNICAL FIELD

This application relates to the field of automotive connectors, and more specifically, related to a connector and a terminal locking mechanism that can be used to assemble a resistor on the connector.

### BACKGROUND

To implement data exchange between multiple electronic components in a vehicle, a vehicle CAN (Controller Area Network) bus technology emerges. The ISO-11898-2 high-speed CAN physical layer specification released by the ISO (International Organization for Standardization) is used as an example. The CAN uses a bus as a signal transmission medium, a plurality of electronic devices that need to perform data exchange are connected to a bus by using respective cable stubs, and each electronic device sends and receives signals by using the bus. In this structure, a 120-ohm terminal resistor needs to be connected in parallel to electronic devices connected to the two ends of the bus, to eliminate signal reflection caused by discontinuous impedance in a communication process.

In an ideal state, electronic devices with terminal resistors are separately disposed at front and rear of the vehicle, and other electronic devices are connected to the bus through cable stubs. However, in an actual scenario, due to different communication requirements of different electronic devices and location constraints on electronic devices in a vehicle, electronic devices with terminal resistors are not located at the front or rear of the vehicle, while electronic devices without terminal resistors are located at the front and rear of the vehicle. Therefore, when a bus is disposed, the bus needs to be wound around an electronic device located at the front or rear of the vehicle, so that a length of a cable stub of the electronic device located at the front or rear of the vehicle meets a maximum allowable length of the cable stub specified by the ISO, and then the two ends of the bus are connected to an electronic device with a terminal resistor. In this way, a length of the bus is increased, causing a waste of the bus.

### SUMMARY

To resolve the foregoing problem, a first aspect of embodiments of this application provides a connector, including a connector housing and terminals, where the terminals are mounted on the connector housing. The connector is provided with a resistor mounting portion and a resistor connecting member. The resistor mounting portion is configured to mount the resistor, and the resistor connecting member is configured to connect the resistor mounted on the resistor mounting portion to the terminal electrically.

With the foregoing arrangement, when electronic devices are disposed in a vehicle, a length of a cable stub does not need to be considered too much, so that more freedom is provided for disposal of the electronic devices, and a case in which a terminal resistor needs to be disconnected in some situations by using a jumper or in another manner is avoided. Flexible configuration of the resistor is implemented, bus winding caused to meet a maximum allowable length of the cable stub is reduced, and a bus length is reduced, thereby reducing costs. Because the bus winding is reduced, in a vehicle in which a plurality of buses coexist, a structure of the buses and cable stubs is simplified to a large extent, and interference caused by the bus winding during debugging and maintenance is reduced, which facilitates fault diagnosis and troubleshooting.

In a possible implementation, a terminal locking mechanism is further included, where the terminal locking mechanism is configured to fasten the terminal onto the connector housing, and the resistor mounting portion is disposed on the terminal locking mechanism.

According to the foregoing arrangement, there is no need to add an additional component to the connector to fasten the resistor, thereby reducing a manufacturing cost of the connector.

In a possible implementation, the terminal locking mechanism is configured to be inserted into the connector housing, and can move between a locked position and an unlocked position. At the locked position, the terminal locking mechanism fastens the terminal onto the connector housing, and at the unlocked position, the terminal locking mechanism unlocks the terminal.

In a possible implementation, when the terminal locking mechanism is at the unlocked position, the resistor mounting portion is outside the connector housing; or when the terminal locking mechanism moves from the unlocked position to the locked position, the resistor mounting portion is moved into the connector housing along with the movement of the terminal locking mechanism.

With the foregoing arrangement, the resistor mounting portion is limited while the terminal locking mechanism is configured to lock the connector housing, so as to prevent the resistor from falling out of the terminal locking mechanism.

In a possible implementation, a groove is disposed on the resistor mounting portion, and the resistor can be placed in the groove. When the terminal locking mechanism is located at the locked position, the groove is sealed by the connector housing.

With the foregoing arrangement, there is no need to add an extra mechanism to the terminal locking mechanism to fasten the resistor, so that a structure of the terminal locking mechanism is simple and easy to process, and a manufacturing cost of the terminal locking mechanism is reduced.

In a possible implementation, the resistor connecting member includes a resistor conduction portion clamped to two ends of the resistor and a terminal conduction portion abutting against the terminal, where the resistor conduction portion is electrically connected to the terminal conduction portion.

In a possible implementation, the terminal conduction portion is an elastic spring plate. One end of the terminal conduction portion is fastened to the terminal locking mechanism, and the other end of the terminal conduction portion is configured to be in contact with the terminal, so that when the terminal locking mechanism fastens the terminal to the connector housing, the terminal conduction portion abuts against the terminal.

With the foregoing arrangement, deformation occurs when the elastic spring plate abuts against the terminal, and the terminal is subject to an elastic force generated by the elastic spring plate, thereby ensuring a reliable electrical connection between the resistor and the terminal.

In a possible implementation, the resistor conduction portion includes a pair of a first conductive sheet and a second conductive sheet that abut against each other. One end of the first conductive sheet and one end of the second conductive sheet are fastened to the resistor mounting portion, and the other end of the first conductive sheet and the other end of the second conductive sheet abut against each other, so that either end of the resistor can be inserted between the one end of the first conductive sheet and the one end of the second conductive sheet that abut against each other.

With the foregoing arrangement, the electrical connection between the resistor and the terminal can be implemented through insertion of the resistor between the first conductive sheet and the second conductive sheet, so that the electrical connection between the resistor and the terminal is simplified.

In a possible implementation, the resistor conduction portion includes a hole that accommodates either end of the resistor, so that the either end of the resistor can be inserted into the hole.

With the foregoing arrangement, the electrical connection between the resistor and the terminal can be implemented through insertion of the resistor into the hole, so that the electrical connection between the resistor and the terminal is simplified.

In a possible implementation, the resistor conduction portion and the terminal conduction portion are electrically connected by using a conductor.

A second aspect of the embodiments of this application provides a terminal locking mechanism, configured to fasten a terminal to a connector housing, where a resistor mounting portion and a resistor connecting member are disposed on the terminal locking mechanism. The resistor mounting portion is configured to mount a resistor, and the resistor connecting member is configured to electrically connect the resistor mounted on the resistor mounting portion to the terminal.

In a possible implementation, the terminal locking mechanism can move between a locked position and an unlocked position. At the locked position, the terminal locking mechanism fastens the terminal onto the connector housing, and at the unlocked position, the terminal locking mechanism unlocks the terminal.

In a possible implementation, when the terminal locking mechanism is at the unlocked position, the resistor mounting portion is outside the connector housing; or when the terminal locking mechanism moves from the unlocked position to the locked position, the resistor mounting portion is moved into the connector housing along with the movement of the terminal locking mechanism.

In a possible implementation, a groove is disposed on the resistor mounting portion, and the resistor can be placed in the groove. When the terminal locking mechanism is located at the locked position, the groove is sealed by the connector housing.

In a possible implementation, the resistor connecting member includes the resistor conduction portion clamped to two ends of the resistor and the terminal conduction portion abutting against the terminal, where the resistor conduction portion is electrically connected to the terminal conduction portion.

In a possible implementation, the terminal conduction portion is an elastic spring plate. One end of the terminal conduction portion is fastened onto the terminal locking mechanism, and the other end of the terminal conduction portion is configured to be in contact with the terminal, so that when the terminal locking mechanism fastens the terminal to the connector housing, the terminal conduction portion abuts against the terminal.

In a possible implementation, the resistor conduction portion includes a pair of a first conductive sheet and a second conductive sheet that abut against each other. One end of the first conductive sheet and one end of the second conductive sheet are fastened to the resistor mounting portion, and the other end of the first conductive sheet and the other end of the second conductive sheet abut against each other, so that either end of the resistor can be inserted between the one end of the first conductive sheet and the one end of the second conductive sheet that abut against each other.

In a possible implementation, the resistor conduction portion includes a hole that accommodates either end of the resistor, so that the either end of the resistor can be inserted into the hole.

In a possible implementation, the resistor conduction portion and the terminal conduction portion are connected by using a conductor.

These aspects and other aspects of the present invention are more concise and more comprehensive in descriptions of the following (a plurality of) embodiments.

### BRIEF DESCRIPTION OF DRAWINGS

The following further describes features of the present invention and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, same reference numerals represent same content. The specific accompanying drawings are described as follows:
FIG. 1a is a schematic diagram of a CAN structure of a vehicle chassis in the conventional technologies;
FIG. 1b is a schematic diagram of a CAN structure in the conventional technology 1;
FIG. 1c is a schematic diagram of a CAN structure in the conventional technology 2;
FIG. 2 is an exploded view of a structure of a female connector according to Embodiment 1 of this application;
FIG. 3 is a sectional view of a female connector according to Embodiment 1 of this application;
FIG. 4 is a schematic diagram of a structure of a female connector according to Embodiment 1 of this application, where a terminal locking mechanism is not at a locked position;
FIG. 5 is a schematic diagram of a structure of a female connector according to Embodiment 1 of this application, where a terminal locking mechanism is located at a locked position;
FIG. 6a is a schematic diagram of a structure of a terminal locking mechanism of a female connector according to Embodiment 1 of this application;
FIG. 6b is a schematic diagram of a structure of a terminal locking mechanism of a female connector according to Embodiment 1 of this application;
FIG. 7 is a schematic diagram of a structure of a female connector housing of a female connector according to Embodiment 1 of this application;
FIG. 8a and FIG. 8b are exploded views of structures of female connectors according to Embodiment 2 of this application;
FIG. 8c is a sectional view of a female connector according to Embodiment 2 of this application;
FIG. 9 is a schematic diagram of a structure of a female connector according to Embodiment 2 of this application, where a terminal locking mechanism is not at a locked position;
FIG. 10 is a schematic diagram of a structure of a female connector according to Embodiment 2 of this application, where a terminal locking mechanism is located at a locked position;
FIG. 11 is a schematic diagram of a structure of a terminal locking mechanism of a female connector according to Embodiment 2 of this application, where a terminal is located on the terminal locking mechanism; and
FIG. 12 is a schematic diagram of a CAN structure of a vehicle chassis using a female connector according to an embodiment of this application.

### DESCRIPTION OF EMBODIMENTS

In this specification and claims, the terms "first", "second", "third", and the like are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" used in this specification and claims should not be construed as being limited to the content listed below, and does not exclude other elements. It should be construed as specifying existence of a mentioned feature, whole, or part, but does not preclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification indicates that a particular feature, structure or property that is described with reference to the embodiment is included in at least one embodiment of the present invention. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing embodiments of this application, but are not intended to limit this application.

A connector position assurance mechanism (Connector Position Assurance, CPA for short) is a mechanism for fastening a housing of a male connector and a housing of a female connector together when the male connector is connected to the female connector, which can enhance reliability of a connection between the housing of the male connector and the housing of the female connector and prevent the male connector from being disconnected from the female connector under vehicle vibration.

A terminal position assurance mechanism (Terminal Position Assurance, TPAfor short) is a mechanism used to fasten a terminal onto a connector housing after the terminal is inserted into the connector housing, so as to maintain a position of the terminal on the housing and prevent the terminal from being deviated under vehicle vibration.

A controller area network (Controller Area Network, CAN for short) is one of fieldbuses, and is used for communication between various electronic devices in a vehicle and signal transmission between these electronic devices.

First, disadvantages of the conventional technology found by the inventor are described.

In a vehicle, an electronic component usually needs to be connected to a wire in the vehicle by using a connector, so as to implement an electrical connection or a signal connection between different electronic components. The connector generally includes a female connector and a male connector that mates with the female connector. The male connector may be fastened to an electronic component such as a controller, the female connector may be connected to one end of a cable stub, and the other end of the cable stub may be connected to a bus. When the female connector is fastened together with the male connector by using the CPA, signal connection between the electronic component and the bus is implemented.

Table 1 shows empirical maximum allowable lengths of the cable stub and the bus under different transmission baud rates. When a maximum transmission rate is 1 Mbit/s, a length 1 of the cable stub (cable stub) is less than 0.3 m, and a length L of the bus is less than 40 m. In other transmission rates, the maximum length of the bus and the maximum length of the cable stub are set according to actual signal quality. On the premise that the transmission rate is satisfied, the maximum allowable length of the bus is generally relatively large, while the maximum allowable length of the cable stub is generally small. Therefore, when the bus and the cable stub are disposed, the bus usually needs to be routed as close as possible to each electronic device, so that the length of the cable stub is less than the maximum allowable length of the cable stub.

**Table 1**

| Transmission baud rate (kbit/s) | Maximum allowable length of bus (m) | Maximum allowable length of branch line (m) |
|---|---|---|
| 1000 | 40 | 0.3 |
| 500 | 100 | 0.75 |
| 250 | 250 | 1.5 |
| 125 | 500 | 3.75 |

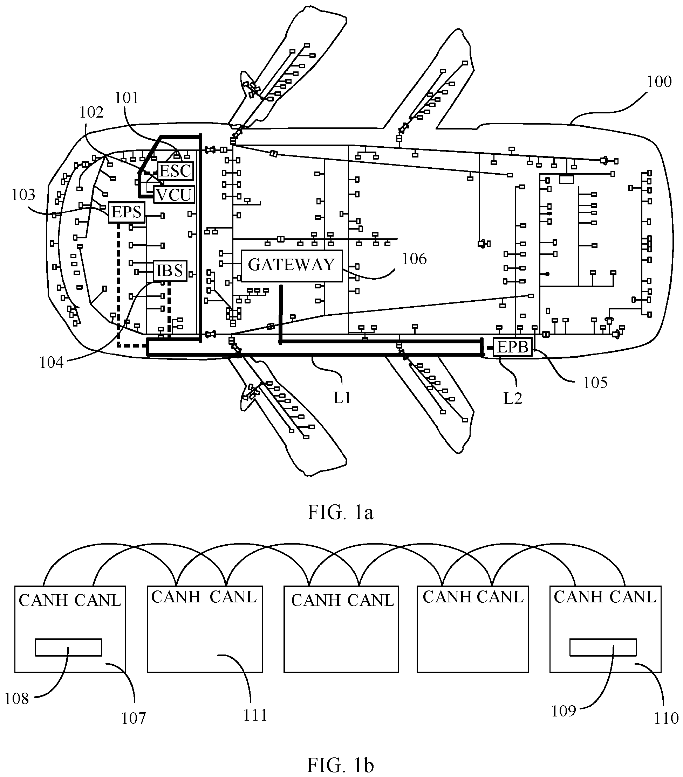

The CAN of the vehicle chassis shown in FIG. 1a is used as an example. Electronic devices connected to a bus may include an electronic speed controller 101 (Electronic Speed Controller, ESC for short), a vehicle control unit 102 (Vehicle Control Unit, VCU for short), an electric power steering device 103 (Electric Power Steering, EPS for short), an integrated brake system 104 (Integrated Brake System, IBS for short), an electric park brake system 105 (Electric Park Brake, EPB for short), and a protocol converter 106 (GATEWAY). A terminal resistor is assembled in the vehicle control unit 102 and the protocol converter 106. Therefore, controllers connected to both ends of a bus L1 are arranged as the vehicle control unit 102 and the protocol converter 106. It can be learned from the figure that the vehicle control unit 102 and the protocol converter 106 are disposed relatively close to a front part of a vehicle 100, while the electric park brake system 105 is disposed relatively close to a rear part of the vehicle. When the bus L1 is disposed, the bus L1 needs to be first wound around the electric park brake system 105 in the rear part of the vehicle, to ensure that a length of a cable stub L2 between the electric park brake system 105 and the bus L1 is less than a maximum allowable length, and then one end of the bus L1 is connected to the protocol converter 106. In this way, a length of the bus L1 is increased, leading to a waste of the bus.

### Related Technology 1

FIG. 1b shows a cabling method in a related technology. In the cabling method, two adjacent electronic devices are connected by using a cable stub. A transceiver of each electronic device is disposed as close as possible to the electronic device (the transceiver and the electronic device 107 are integrated), a high-level output end CANH of each transceiver is connected to a high-level output end CANH of an adjacent transceiver, and a low-level output end CANL of each transceiver is connected to a low-level output end CANL of an adjacent CAN transceiver. In FIG. 1b, resistors 108 and 109 are assembled in electronic devices 107 and 110, respectively. This cabling method reduces a length of a cable stub and minimizes the length of the cable stub. However, this cabling method has the following disadvantages: 1. If one or more electronic devices further need to be connected to another electronic device, this cabling method increases a quantity of cable stubs in a significant manner. 2. The increase in the quantity of cable stubs makes it difficult to locate faults.

### Related Technology 2

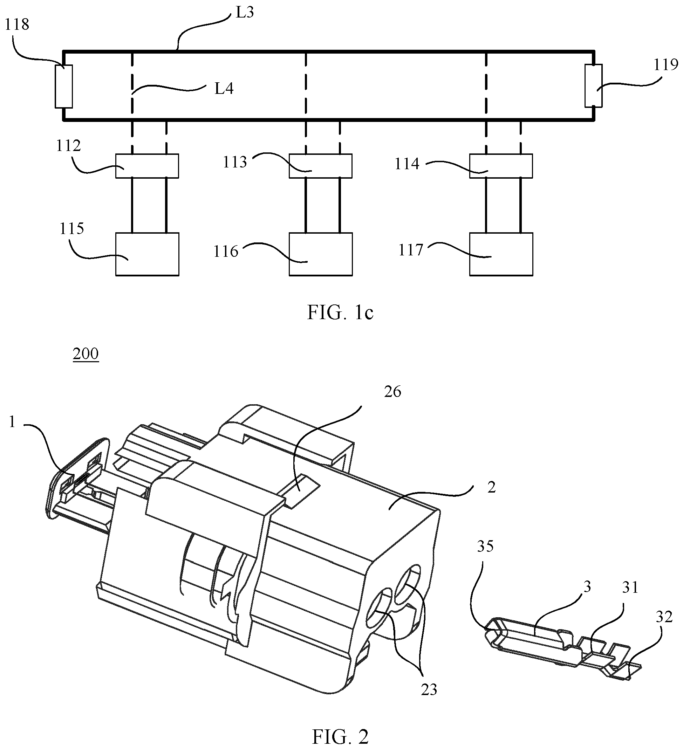

FIG. 1c shows a cabling method in a related technology 2. Transceivers 112, 113, and 114 and electronic devices 115, 116, and 117 are disposed separately. The transceivers 112, 113, and 114 are disposed close to the bus L3, and connection lines between the transceivers and the electronic devices are not restricted by a maximum allowable length of a cable stub, thereby ensuring that a cable stub L4 connecting the transceivers 112, 113, and 114 and the bus is as short as possible. However, this cabling method has the following disadvantages: 1. A transceiver needs to be disposed between each electronic device and a bus, therefore occupying space in a vehicle. 2. Newly added transceivers increase costs significantly.

### Related Technology 3

The conventional technology 3 provides a CAN hub, so that a plurality of electronic devices that need to perform communication transmit signals through the CAN hub, and each electronic device is connected to one CAN hub. However, this solution has the following disadvantages: This solution is applicable only to a test scenario, there is no space for deploying a CAN hub on a vehicle, and there is no condition for signal transmission by using the CAN hub. Because of a connection between an electronic device and a CAN hub, a quantity of cables and connection complexity of the cables are significantly increased.

To resolve the foregoing problem, a first aspect of embodiments of this application provides a connector. A terminal resistor can be assembled on the connector according to a requirement, so that the terminal resistor is flexibly adapted to an electronic device located at each location of a vehicle, and a bus length does not need to be increased unnecessarily to meet a maximum allowable length of a cable stub, thereby reducing the bus length and saving costs.

### Embodiment 1

The connector is a component that is configured to implement signal connection or electrical connection between electronic components. One end of the connector is connected to an electronic component, and the other end of the connector may be connected to a wire. The wire is connected to a bus, so that the electronic component is connected to the bus.

FIG. 2 is an exploded view of a female connector 200 according to Embodiment 1 of this application. The female connector 200 according to Embodiment 1 may include: a terminal locking mechanism 1, a connector housing 2, and a terminal 3. The connector housing 2 is configured to accommodate the terminal 3, the terminal 3 is configured to implement connection between a wire and an electronic component, and the terminal locking mechanism 1 is configured to fasten the terminal 3 in the connector housing 2.

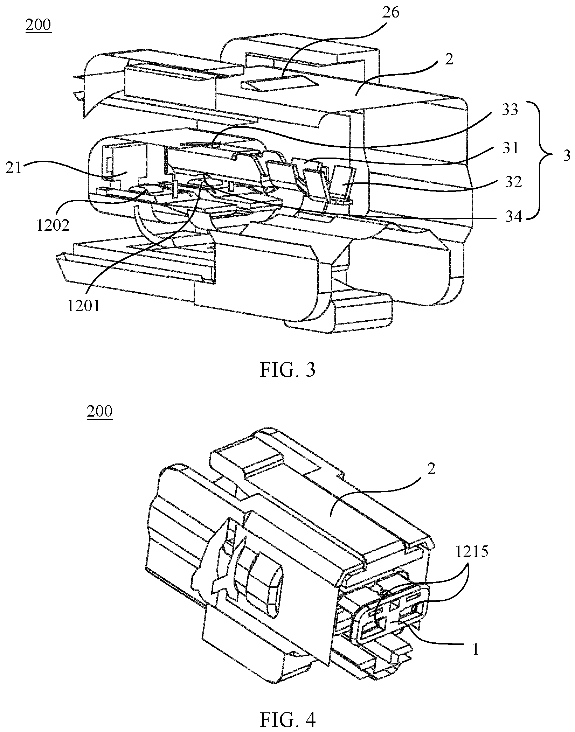

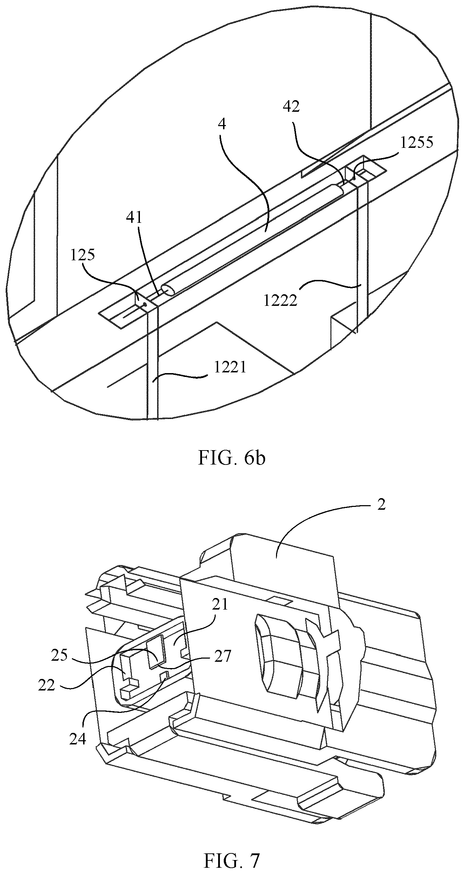

As shown in FIG. 2, a clipping part 26 is disposed on an outer side of the connector housing 2, and the clipping part 26 mates with a male connector on an electronic component side, so as to implement connection between the female connector 200 and the male connector. As shown in FIG. 3, a cavity 21 configured to accommodate the terminal 3 and the terminal locking mechanism 1 is disposed inside the connector housing 2. A wire hole 23 (as shown in FIG. 2) configured to insert the terminal 3 into the cavity 21 is disposed on a side of the connector housing 2 connected to a wire; and an opening 22 (as shown in FIG. 7) configured to insert the terminal locking mechanism 1 is disposed on a side of the connector housing 2 connected to an electronic component.

As shown in FIG. 2 and FIG. 3, the terminal 3 is a metal conductive mechanism. One end of the terminal 3 is provided with a receptacle 35 configured to accommodate a male terminal on an electronic component side; and the other end of the terminal 3 is provided with a first V-shaped fastening portion 31 and a second V-shaped fastening portion 32 that are configured to fasten a wire. When the terminal 3 needs to be inserted into the cavity 21, a conductive end of the wire is first placed into the first V-shaped fastening portion 31, and an insulation part that wraps the wire is placed into the second V-shaped fastening portion 32. Then, an end of the terminal 3 equipped with the wire and provided with the receptacle 35 is inserted into the cavity 21 from the wire hole 23, and a lifting piece 33 disposed on the terminal 3 mates with a limiting piece 214 disposed on a side wall of the cavity 21, so as to implement a first locking between the terminal 3 and the connector housing 2. Then, the terminal locking mechanism 1 is inserted into the cavity 21 from the opening 22 (as shown in FIG. 7). Protrusions 1201 and 1202 on the terminal locking mechanism 1 cooperate with a concave part 34 on the terminal 3, so as to implement a second locking between the terminal 3 and the connector housing 2, so that the terminal 3 is fastened inside the connector housing 2, and the terminal 3 is prevented from being deviated or even falling out of the connector housing 2 due to vehicle vibration.

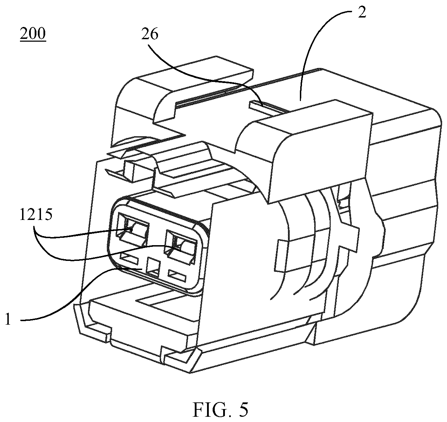

The terminal locking mechanism 1 is usually made of an insulated plastic material and has a deformation capability. When the connector is delivered from the factory, the terminal locking mechanism 1 generally does not stay at the locked position (as shown in FIG. 4). After the terminal 3 is inserted into the connector housing 2, the terminal locking mechanism 1 is further pushed into the cavity 21 and stays at the locked position (as shown in FIG. 5).

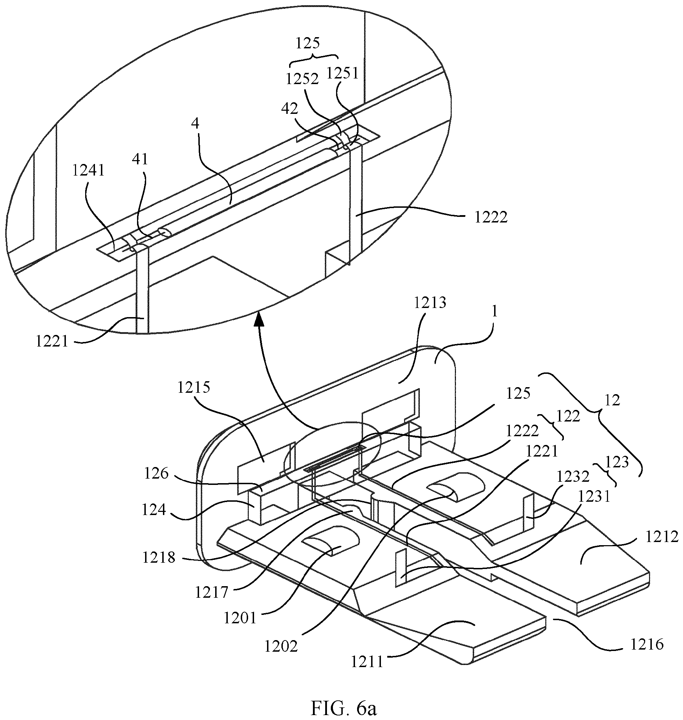

As shown in FIG. 6a, the terminal locking mechanism 1 includes a resistor mounting portion 124, and a resistor connecting member 12.

The body 121 includes: a male terminal contact plate 1213, where the male terminal contact plate 1213 is provided with two male terminal holes 1215 for enabling a male terminal to pass through; a first mounting leg 1211 and a second mounting leg 1212 that are perpendicular to an extended plane of the male terminal contact plate 1213, where the first mounting leg 1211 and the second mounting leg 1212 are parallel to each other and located on a same side of the male terminal contact plate 1213; and a resistor mounting portion 124 that is disposed on the first mounting leg 1211 and the second mounting leg 1212 and connected to the male terminal contact plate 1213.

There is a spacing between the first mounting leg 1211 and the second mounting leg 1212, and the spacing forms a slit 1216. A pair of a first lock-up protrusion 1217 and a second lock-up protrusion 1218 that are used to fasten the terminal locking mechanism 1 onto the connector housing 2 are respectively disposed on a side of the first mounting leg 1211 facing the slit 1216 and a side of the second mounting leg 1212 facing the slit 1216. As shown in FIG. 7, a stopper 24 clamped with the first lock-up protrusion 1217 and the second lock-up protrusion 1218 is disposed at the opening 22 of the connector housing 2. When the female connector 200 is in a factory state, the terminal locking mechanism 1 is partially inserted into the cavity 21 and stays at a non-locked position (as shown in FIG. 4), the stopper 24 is located in the slit 1216, and the first lock-up protrusion 1217 and the second lock-up protrusion 1218 are located on an outer side of the cavity 21 relative to the stopper 24. When the terminal locking mechanism 1 is pushed towards the cavity 21, the first lock-up protrusion 1217 and the second lock-up protrusion 1218 deform under an action of the stopper 24, and the first mounting leg 1211 and the second mounting leg 1212 expand outwards relative to the slit 1216 to expand a width of the mounting slit 1216, so that the first lock-up protrusion 1217 and the second lock-up protrusion 1218 are moved to a side that is of the stopper 24 and that faces the cavity 21. In this case, the terminal locking mechanism 1 stays at the locked position.

The resistor mounting portion 124 may be a cuboid, and a plane of the cuboid that is parallel to the extension directions of the first mounting leg 1211 and the second mounting leg 1212 forms a first limiting surface 126. A groove 1241 for mounting a resistor 4 is disposed on the first limiting surface 126. As shown in FIG. 7, a limiting part 25 configured to cooperate with the resistor mounting portion 124 of the terminal locking mechanism 1 is disposed at the opening 22 of the connector housing 2. The limiting part 25 has a second limiting surface 27, which can fit the first limiting surface 126 of the terminal locking mechanism 1 in a shape. When the terminal locking mechanism 1 stays at the locked position, the second limiting surface 27 on the limiting part 25 can cover the groove 1241 disposed on the first limiting surface 126, so that the resistor 4 can be sealed in the groove 1241, preventing the resistor 4 from falling out of the groove 1241. Through direct disposal of the groove 1241 on the resistor mounting portion, the terminal locking mechanism 1 can move between the locked position and a non-locked position, so as to implement fastening and disassembling of the resistor, without addition of an extra mechanism to fasten the resistor, so that the terminal locking mechanism 1 is easy to process and a manufacturing cost of the terminal locking mechanism 1 is reduced.

The body 121 is further provided with a resistor connecting member 12 configured to electrically connect the resistor 4 to the terminal 3. The resistor connecting member 12 includes a resistor conduction portion 125 configured to connect to the resistor 4, a terminal conduction portion 123 configured to connect to the terminal, and a conductor 122 configured to connect the resistor conduction portion 125 to the terminal conduction portion 123. The conductor 122 may be a first conductive wire 1221 and a second conductive wire 1222.

The resistor conduction portion 125 is disposed at two ends of the groove 1241, and is configured to clamp pin cables 41 and 42 at the two ends of the resistor 4, so that the resistor 4 is electrically connected to the wire 122. The resistor conduction portion 125 may include a pair of a first conductive sheet 1251 and a second conductive sheet 1252 that abut against each other. One or both of the first conductive sheet 1251 and the second conductive sheet 1252 are connected to the first conductive wire 1221 or the second conductive wire 1222. One end of the first conductive sheet 1251 and one end of the second conductive sheet 1252 are fixedly connected to two opposite inner walls of the groove 1241, and the other end of the first conductive sheet 1251 and the other end of the second conductive sheet 1252 abut against each other to form a pressing surface. When the resistor 4 needs to be mounted on the terminal locking mechanism 1, it is only necessary to place the resistor 4 in the groove 1241 and insert the pin cables 41 and 42 at the two ends of the resistor 4 into the pressing surface respectively. The resistor connecting member 125 is disposed to facilitate connection between the resistor 4 and the first conductive wire 1221 and connection between the resistor 4 and the second conductive wire 1222, so that there is no need to connect a conductive end of the wire 122 to the pin cables 41 and 42 of the resistor 4 through winding or welding.

As shown in FIG. 6b, the resistor conduction portion 125 is not limited to forming the first conductive sheet 1251 and second conductive sheet 1252 that abut against each other, and may further be a conduction portion that can enable the pin cables 41 and 42 of the resistor 4 to pass through a pin hole 1255. The resistor conduction portions 125 are fastened at the two ends of the groove 1241 and are connected to the first conductive wire 1221 and the second conductive wire 1222, respectively. When the resistor 4 needs to be mounted in the groove 1241, only the pin cables 41 and 42 at the two ends of the resistor 4 need to be respectively inserted into the pin holes 1255. The resistor conduction portion 125 in this application is not limited to the foregoing two structures, provided that the pin cables 41 and 42 of the resistor 4 can be fastened to the resistor conduction portion 125.

As shown in FIG. 6a, the terminal conduction portion 123 includes a first spring plate 1231 and a second spring plate 1232. The first spring plate 1231 and the second spring plate 1232 may be of a rectangular sheet-like structure, and have an elastic deformation capability. One end of the first spring plate 1231 and one end of the second spring plate 1232 are respectively fastened to the first mounting leg 1211 and the second mounting leg 1212, and the other ends of the two spring plates extend in a direction away from the first mounting leg 1211 and the second mounting leg 1212 and are configured to abut against the terminal 3 (as shown in FIG. 3). In a process of inserting the terminal 3 into the housing 2, the first spring plate 1231 and the second spring plate 1232 are deformed to some extent under extrusion of the terminal 3, and the first spring plate 1231 and the second spring plate 1232 apply an elastic force to the terminal 3, so that the first spring plate 1231 and the second spring plate 1232 are in reliable contact with the terminal 3. Structures (that is, rectangular sheet-like structures) of the first spring plate 1231 and the second spring plate 1232 shown in the figure are merely examples. However, the structures of the first spring plate 1231 and the second spring plate 1232 are not limited in this embodiment of this application. Alternatively, the first spring plate 1231 and the second spring plate 1232 may be in a shape of a rotary torsion spring, provided that the first spring plate 1231 and the second spring plate 1232 can be in elastic contact with the terminal 3. A reliable electrical connection between the resistor and the terminal is implemented through elastic pressing between the elastic spring plate and the terminal.

As shown in FIG. 6a, one end of the first conductive wire 1221 is located in the groove 1241 and is connected to the resistor conduction portion 125; and the other end of the first conductive wire 1221 is located on the first mounting leg 1211 and is connected to the first spring plate 1231 fastened to the first mounting leg 1211. One end of the second conductive wire 1222 is located at the resistor mounting portion 124 and is connected to the resistor conduction portion 125; and the other end of the second conductive wire 1222 is located on the second mounting leg 1212 and is connected to the second spring plate 1232 fastened onto the second mounting leg 1212. The wire 122 may be exposed to an outer surface of the body 121. For example, the wire 122 is fastened onto the outer surface of the body 121 by using glue, a fastener, or the like. Alternatively, a groove for accommodating the wire 122 may be disposed on the body 121. One end of the groove is connected to the resistor mounting portion 124, and the other end of the groove is connected to the terminal conduction portion 123. The wire 122 is fastened onto the body 121 through placement of the wire 122 in the groove. The wire 122 may alternatively be buried inside the body 121, with one end of the wire 122 exposed to the resistor mounting portion 124 and the other end of the wire 122 connected to the terminal conduction portion 123.

### Embodiment 2

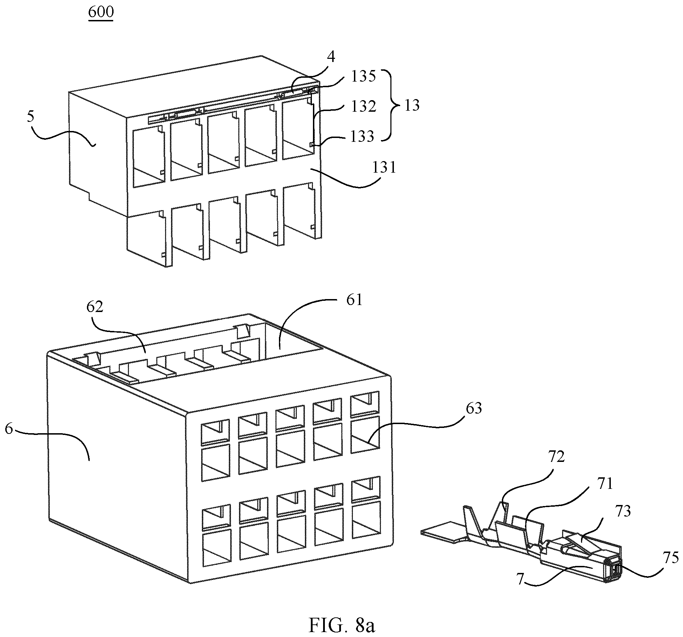

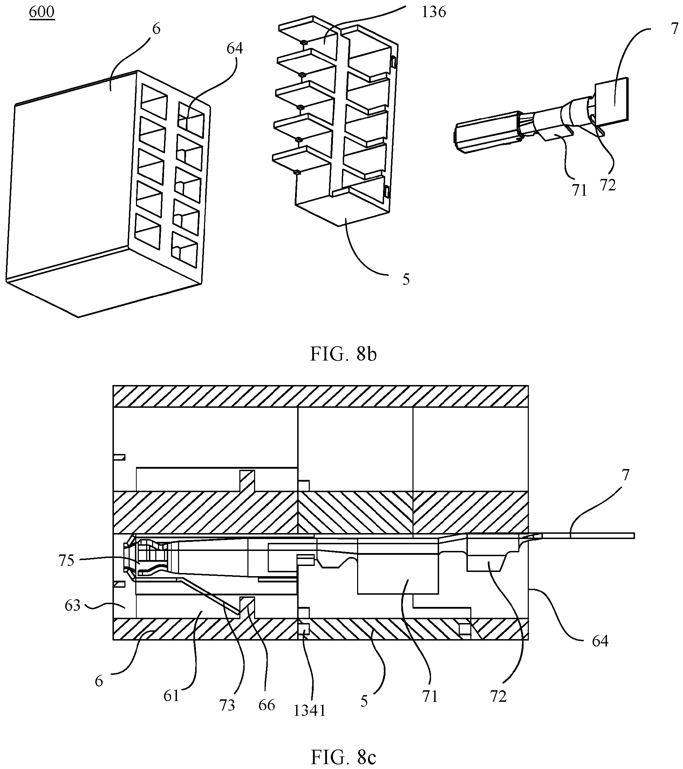

FIG. 8a and FIG. 8b are exploded views of a female connector 600 according to Embodiment 2 of this application. The female connector 600 according to Embodiment 2 includes: a terminal locking mechanism 5, a connector housing 6, and a terminal 7. Similar to Embodiment 1, the connector housing 6 is configured to accommodate the terminal 7, the terminal 7 is configured to implement connection between a wire and an electronic component, and the terminal locking mechanism 5 is configured to fasten the terminal 7 in the connector housing 6.

A cavity 61 for accommodating the terminal locking mechanism 5 and the terminal 7 is disposed inside the connector housing 6, a male terminal hole 63 for inserting a male terminal at an electronic component side is disposed on a side of the connector housing 6 for connecting to the electronic component, and a wire hole 64 for inserting the terminal 7 is disposed on a side of the connector housing 6 for connecting to the wire. The male terminal hole 63 and the wire hole 64 are located on opposite sides of the connector housing 6. The connector housing 6 is further provided with an opening 62 for inserting the terminal locking mechanism 5.

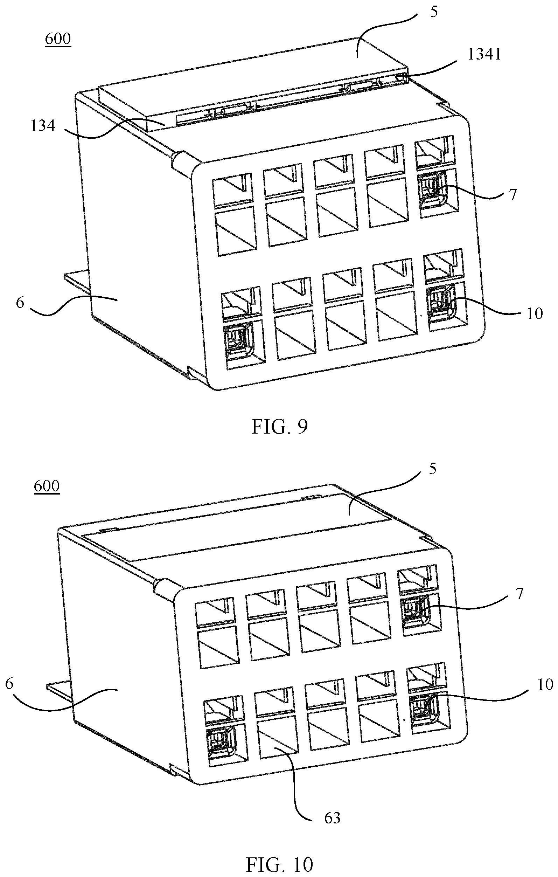

Similar to the terminal 3 in Embodiment 1, one end of the terminal 7 in Embodiment 2 is provided with a receptacle 75 configured to accommodate a male terminal on an electronic component side, and the other end of the terminal 7 is provided with a first V-shaped fastening portion 71 and a second V-shaped fastening portion 72 that are configured to fasten a wire. When the terminal 7 needs to be inserted into the cavity 61, the conductive end of the wire is first placed into the first V-shaped fastening portion 71, and the insulation part wrapping the wire is placed into the second V-shaped fastening portion 72. Then, the terminal locking mechanism 5 is inserted into the cavity 61 from the opening 62, and the terminal locking mechanism 5 is placed at a non-locked position (as shown in FIG. 9). At the non-locked position, a terminal limiting part 136 disposed on the terminal locking mechanism 5 is located outside the connector housing 6 and protrudes from the cavity 61. As shown in FIG. 8c, one end of the terminal 7 disposed with a receptacle 75 is then inserted into the cavity 61 from the wire hole 64. In a process of inserting the terminal 4 into the cavity 61, a lifting piece 73 of the terminal 7 is first squeezed to a leveled state by a protruding limiting piece 66 located on the inner wall of the cavity 61, and then the terminal 7 is further inserted into the cavity 61. The lifting piece 73 of the terminal 7 is removed from the extrusion of the limiting piece 66 and recovers to a lifting state. A lifting end of the lifting piece 73 abuts against the limiting piece 66, so as to prevent the terminal 7 from falling out of the wire hole 64 of the connector housing 6, thereby implementing a first locking of the terminal 7 and the connector housing 6. Finally, the terminal locking mechanism 5 is further inserted into the cavity 61 to the locked position (as shown in FIG. 10). The terminal limiting part 136 disposed on the terminal locking mechanism 5 is located inside the connector housing 6. In a process of moving the terminal locking mechanism 5 to the locked position, a protrusion 1313 on the terminal locking mechanism 5 is pushed into a concave part 74 on the terminal 7, so as to implement a second locking of the terminal 7 and the connector housing 6, thereby preventing the terminal 7 from falling off from the cavity 61 due to vehicle vibration or collision.

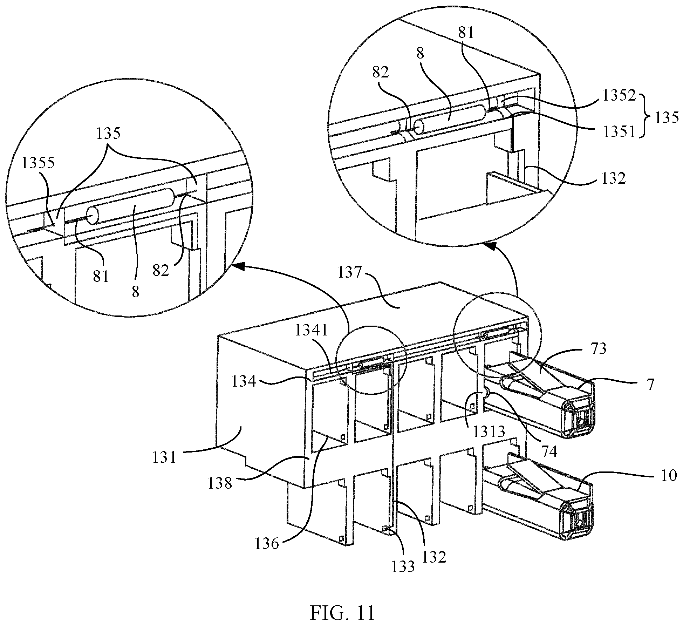

FIG. 11 is a schematic diagram of a structure of the terminal locking mechanism 5 according to Embodiment 2 of this application. The terminal locking mechanism 5 includes a body 131, a resistor mounting portion 134, and a resistor connecting member 13.

The body 131 includes a plurality of terminal limiting parts 136 that run through the body 131 and are configured to accommodate the terminal 7. The terminal limiting part 136 is a hole with a rectangular cross section, and 10 holes are drawn in an exemplary manner, with five holes disposed in a row in parallel. The protrusion 1313 (only one is drawn in the figure) protruding outwards and configured to cooperate with the concave part 74 on the terminal 7 is disposed on a side wall of each terminal limiting part 136. The body 131 has a press-fitting surface 137, configured to cooperate with an outer surface of the connector housing 6. The press-fitting surface 137 is parallel to an extension direction of the terminal limiting part 136. When the terminal locking mechanism 5 stays at a non-locked position, the press-fitting surface 137 protrudes from the outer surface of the connector housing 6 (as shown in FIG. 9). When the terminal locking mechanism 5 needs to be moved to the locked position, the press-fitting surface 137 is pressed until the press-fitting surface 137 and the outer surface of the connector housing 6 are in a same plane (as shown in FIG. 10). The body 131 further includes a second surface 138 configured to be in contact with an inner wall of the connector housing 6. When the terminal locking mechanism 5 stays at the locked position (as shown in FIG. 10), the second surface 138 is completely buried in the cavity 61 and contacts the inner wall of the connector housing 6. When the terminal locking mechanism 5 stays at a non-locked position (as shown in FIG. 9), the second surface 138 partially protrudes from the cavity 61. A resistor mounting portion 134 is disposed on a part of the second surface 138 that protrudes from the cavity 61. A groove 1341 for accommodating a resistor 8 is disposed on the resistor mounting portion 134 along a direction of disposing the terminal limiting part 136. When the terminal locking mechanism 5 stays at the locked position, the inner wall of the connector housing 6 covers the groove 1341, so that the resistor 8 can be sealed in the groove 1341, preventing the resistor 8 from falling out of the resistor mounting portion 134. Through disposal of the groove 1341 on the body 131, the terminal locking mechanism 5 can move between the locked position and a non-locked position, so as to implement disassembly and fastening of the resistor, without addition of an extra mechanism to fasten the resistor, so that the terminal locking mechanism 5 is easy to process and a manufacturing cost of the terminal locking mechanism 5 is reduced.

As shown in FIG. 8a, a resistor connecting member 13 configured to electrically connect the resistor 4 to the terminal 7 is further disposed on the body 131. The resistor connecting member 13 includes a resistor conduction portion 135 configured to connect to the resistor 4, a terminal conduction portion 133 configured to connect to the terminal, and a conductor 132 configured to connect the resistor conduction portion 135 to the terminal conduction portion 133. The conductor 132 may be a conducting wire.

As shown in FIG. 11, similar to Embodiment 1, the resistor conduction portion 135 is disposed in the groove 1341, and is configured to clamp pin cables 81 and 82 at two ends of the resistor 8, so that the resistor 8 is electrically connected to the conductor 132. A spacing between the two resistor conduction portions 135 is approximately a length of one resistor 8. A structure of the resistor conduction portion 135 is similar to that in Embodiment 1, and the resistor conduction portion 135 may include a pair of a first conductive sheet 1351 and a second conductive sheet 1352 that abut against each other. One or both of the first conductive sheet 1351 and the second conductive sheet 1352 are connected to the conductor 132. One end of the first conductive sheet 1351 and one end of the second conductive sheet 1352 are fixedly connected to two opposite inner walls of the groove 1341, and the other end of the first conductive sheet 1351 and the other end of the second conductive sheet 1352 abut against each other to form a pressing surface, configured to clamp the pin cables 81 and 82 at the two ends of the resistor 8. When the resistor 8 is mounted, an electrical connection between the resistor and the terminal can be implemented through insertion of the resistor between the first conductive sheet and the second conductive sheet, so that the electrical connection between the resistor and the terminal is simplified. The resistor conduction portion 135 may also be a sheet-like conductive mechanism provided with a pin hole 1355 through which the pin cables 81 and 82 of the resistor 8 run. The resistor conduction portion 135 in this application is not limited to the foregoing two structures, provided that the pin cables 81 and 82 of the resistor 8 can be fastened to the resistor conduction portion 135.

The terminal conduction portion 133 is configured to be in contact with the terminal, so as to connect the resistor 8 to the terminal. The terminal conduction portion 133 configured to be in contact with the terminal is disposed on a side wall of each terminal limiting part 136. In this embodiment of this application, for example, the terminal conduction portion 133 is disposed on a same side of the terminal limiting part 136. However, a location of the terminal conduction portion 133 is not limited in this application, provided that the terminal conduction portion 133 can be in contact with the terminal 7. Similar to Embodiment 1, the terminal conduction portion 133 is a metal sheet with an elastic deformation capability. One end of the terminal conduction portion 133 is fastened onto a side wall of the terminal limiting part 136, and the other end of the terminal conduction portion 133 extends in a direction away from the side wall and is configured to abut against the terminal 7. In a process of inserting the terminal 7 into the connector housing 6, the terminal conduction portion 133 deforms when squeezed by the terminal 7, so as to apply an elastic force to the terminal 7, thereby implementing reliable contact between the terminal 7 and the terminal conduction portion 133. A structure (that is, a rectangular sheet-like structure) of the terminal conduction portion 133 is shown in the figure merely as an example. However, the structure of the terminal conduction portion 133 is not limited in this embodiment of this application. Alternatively, the terminal conduction portion 133 may be in a shape of a rotary torsion spring, provided that the terminal conduction portion 133 can be in elastic contact with the terminal 7.

Similar to Embodiment 1, the conductor 132 may be a conducting wire, and may be exposed on a surface of the body 131. The conductor 132 is fastened to the second surface 138 of the body 131 by using glue, a fastener, or the like, or is fastened to the side wall of the terminal limiting part 136. Alternatively, a conductor groove configured to accommodate the conductor 132 may be disposed on the body 131. For example, the conductor groove is disposed on the side wall of the terminal limiting part 136, and the conductor groove is disposed on a part of the second surface 138 of the body 131 that is buried in the cavity 61. One end of the conductor groove is connected to the resistor mounting portion 134, and the other end of the conductor groove is connected to the terminal conduction portion 133. The conductor 132 is fastened to the body 131 through placement of the conductor 132 in the conductor groove. The conductor 132 may be further buried inside the body 131. One end of the conductor 132 is exposed to the resistor mounting portion 134, and the other end is connected to the terminal conduction portion 133.

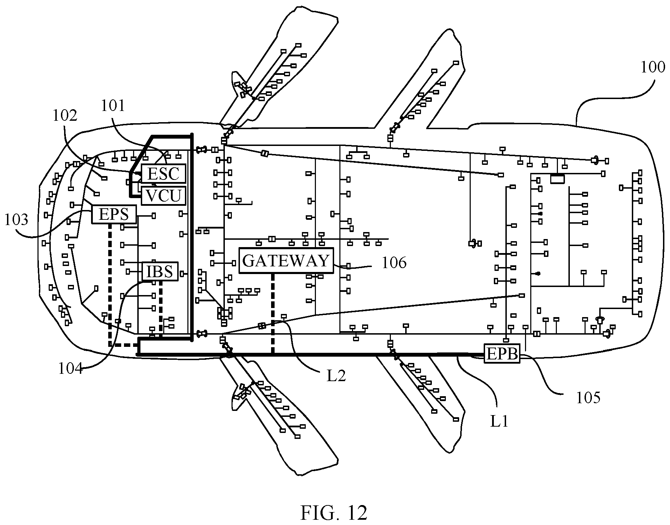

FIG. 12 is a schematic diagram of wiring a vehicle by using female connectors in Embodiment 1 and/or Embodiment 2 of this application. Similar to the vehicle chassis CAN shown in FIG. 1a, electronic devices connected to a bus may include: an electronic speed controller 101, a vehicle control unit 102, an electric power steering device 103, an integrated brake system 104, an electric park brake system 105, and a protocol converter 106. When a bus and a cable stub are disposed, because a resistor can be mounted on a connector side, electronic devices connected to two ends of the bus can be selected according to locations of the electric park brake system 105 and the vehicle control unit 102, and the resistor can be flexibly adapted to female connectors corresponding to the electric park brake system 105 and the vehicle control unit 102. The bus L1 does not need to be first wrapped around the electric park brake system 105 located in a rear half part of the vehicle, and one end of the bus L1 does not need to be then connected to the protocol converter 106, thereby reducing a length of the bus and decreasing a cost of the bus.

It should be noted that the foregoing is merely exemplary embodiments and technical principles of this application. A person skilled in the art may understand that the present invention is not limited to specific embodiments described herein, and a person skilled in the art may make various obvious changes, readjustments, and replacements without departing from the protection scope of the present invention. Therefore, although this application is described in detail with reference to the foregoing embodiments, the present invention is not limited to the foregoing embodiments. More other equivalent embodiments may be included without departing from the concept of the present invention, and all fall within the protection scope of the present invention.

## Claims

1. A connector (200, 600), comprising:
a connector housing (2, 6) and a terminal (3, 7, 10), wherein the terminal (3, 7, 10) is mounted on the connector housing (2, 6); and
a resistor mounting portion (124, 134) and a resistor connecting member (12, 13) are disposed on the connector (200, 600), the resistor mounting portion (124, 134) is configured to mount a resistor (4, 8), and the resistor connecting member (12, 13) is configured to electrically connect the resistor (4, 8) mounted on the resistor mounting portion (124, 134) to the terminal (3, 7, 10).

2. The connector (200, 600) according to claim 1, further comprising a terminal locking mechanism (1, 5), wherein the terminal locking mechanism (1, 5) is configured to fasten the terminal (3, 7, 10) to the connector housing (2, 6), and the resistor mounting portion (124, 134) is disposed on the terminal locking mechanism (1, 5).

3. The connector (200, 600) according to claim 2, wherein the terminal locking mechanism (1, 5) is configured to be inserted into the connector housing (2, 6) and capable of moving between a locked position and an unlocked position;
when the terminal locking mechanism (1, 5) stays at the locked position, the terminal locking mechanism (1, 5) fastens the terminal (3, 7, 10) onto the connector housing (2, 6); or
when the terminal locking mechanism (1, 5) stays at the unlocked position, the terminal locking mechanism (1, 5) unfastens the terminal (3, 7, 10).

4. The connector (200, 600) according to claim 3, wherein
when the terminal locking mechanism (1, 5) stays at the unlocked position, the resistor mounting portion (124, 134) is located outside the connector housing (2, 6); or
when the terminal locking mechanism (1, 5) moves from the unlocked position to the locked position, the resistor mounting portion (124, 134) is moved into the connector housing (2, 6) along with the movement of the terminal locking mechanism (1, 5).

5. The connector (200, 600) according to claim 3, wherein a groove (1241, 1341) is disposed on the resistor mounting portion (124, 134), and the groove (1241, 1341) is configured to accommodate the resistor (4, 8); and
when the terminal locking mechanism (1, 5) stays at the locked position, the groove (1241, 1341) is sealed by the connector housing (2, 6).

6. The connector (200, 600) according to any one of claims 1 to 5, wherein the resistor connecting member (12, 13) comprises: a resistor conduction portion (125, 135) configured to connect to two ends of the resistor (4, 8) in a clamping manner and a terminal conduction portion (123, 133) configured to abut against the terminal (3, 7, 10), and the resistor conduction portion (125, 135) is electrically connected to the terminal conduction portion (123, 133).

7. The connector (200, 600) according to claim 6, wherein the terminal conduction portion (123, 133) is an elastic spring plate, one end thereof is fastened onto the terminal locking mechanism (1, 5), and the other end thereof is configured to be in contact with the terminal (3, 7, 10) so that the terminal (3, 7, 10) is fastened onto the connector housing (2, 6) by the terminal locking mechanism (1, 5), and the terminal conduction portion (123, 133) abuts against the terminal (3, 7, 10).

8. The connector (200, 600) according to claim 6, wherein the resistor conduction portion (125, 135) comprises a pair of a first conductive sheet (1251, 1351) and a second conductive sheet (1252, 1352) that abut against each other; and one end of the first conductive sheet (1251, 1351) and one end of the second conductive sheet (1252, 1352) are fastened to the resistor mounting portion (124, 134), and the other end of the first conductive sheet (1251, 1351) and the other end of the second conductive sheet (1252, 1352) abut against each other, so that either end of the resistor (4, 8) can be inserted between one end of the first conductive sheet (1251, 1351) and one end of the second conductive sheet (1252, 1352) that abut against each other.

9. The connector (200, 600) according to claim 6, wherein the resistor conduction portion (125, 135) comprises a hole (1253, 1353) accommodating either end of the resistor (4, 8) so that the either end of the resistor (4, 8) is capable of being inserted into the hole (1253, 1353).

10. The connector (200, 600) according to claim 6, wherein the resistor conduction portion (125, 135) and the terminal conduction portion (123, 133) are electrically connected through a conductor (122, 132).

11. A terminal locking mechanism (1, 5), wherein the terminal locking mechanism (1, 5) is configured to fasten a terminal (3, 7, 10) onto a connector housing (2, 6), and the terminal locking mechanism (1, 5) is provided with a resistor mounting portion (124, 134) and a resistor connecting member (12, 13); and
the resistor mounting portion (124, 134) is configured to mount a resistor (4, 8), and the resistor connecting member (12, 13) is configured to electrically connect the resistor (4, 8) mounted on the resistor mounting portion (124, 134) to the terminal (3, 7, 10).

12. The terminal locking mechanism (1, 5) according to claim 11, wherein the terminal locking mechanism (1, 5) is capable of moving between a locked position and an unlocked position;
at the locked position, the terminal locking mechanism (1, 5) fastens the terminal (3, 7, 10) onto the connector housing (2, 6); and
at the unlocked position, the terminal locking mechanism (1, 5) unfastens the terminal (3, 7, 10).

13. The terminal locking mechanism (1, 5) according to claim 12, wherein
when the terminal locking mechanism (1, 5) stays at the unlocked position, the resistor mounting portion (124, 134) is outside the connector housing (2, 6); and
when the terminal locking mechanism (1, 5) moves from the unlocked position to the locked position, the resistor mounting portion (124, 134) is moved into the connector housing (2, 6) along with the movement of the terminal locking mechanism (1, 5).

14. The terminal locking mechanism (1, 5) according to claim 13, wherein a groove (1241, 1341) is disposed on the resistor mounting portion (124, 134), the resistor (4, 8) can be placed in the groove (1241, 1341), and when the terminal locking mechanism (1, 5) stays at the locked position, the groove (1241, 1341) is sealed by the connector housing (2, 6).

15. The connector (200, 600) according to claim 11, wherein the resistor connecting member (12, 13) comprises a resistor conduction portion (125, 135) configured to connect to the two ends of the resistor (4, 8) in a clamping manner and a terminal conduction portion (123, 133) configured to abut against the terminal (3, 7, 10), and the resistor conduction portion (125, 135) is electrically connected to the terminal conduction portion (123, 133).

16. The connector (200, 600) according to claim 15, wherein the terminal conduction portion (123, 133) is an elastic spring plate, one end thereof is fastened onto the terminal locking mechanism (1, 5), and the other end thereof is configured to be in contact with the terminal (3, 7, 10) so that the terminal (3, 7, 10) is fastened in the connector housing (2, 6) by the terminal locking mechanism (1, 5), and the terminal conduction portion (123, 133) abuts against the terminal (3, 7, 10).

17. The connector (200, 600) according to claim 15, wherein the resistor conduction portion (125, 135) comprises a pair of a first conductive sheet (1251, 1351) and a second conductive sheet (1252, 1352) that abut against each other; and one end of the first conductive sheet (1251, 1351) and one end of the second conductive sheet (1252, 1352) are fastened to the resistor mounting portion (124, 134), and the other end of the first conductive sheet (1251, 1351) and the other end of the second conductive sheet (1252, 1352) abut against each other, so that either end of the resistor (4, 8) can be inserted between one end of the first conductive sheet (1251, 1351) and one end of the second conductive sheet (1252, 1352) that abut against each other.

18. The connector (200, 600) according to claim 15, wherein the resistor conduction portion (125, 135) comprises a hole (1253, 1353) accommodating either end of the resistor (4, 8) so that the either end of the resistor (4, 8) is capable of being inserted into the hole (1253, 1353).

19. The terminal locking mechanism (1, 5) according to claim 15, wherein the resistor conduction portion (125, 135) and the terminal conduction portion (123, 133) are connected through a conductor (122, 132).
